# EUROPEAN PATENT APPLICATION

(11) **EP 2 463 777 A1**
(43) Date of publication of application: **13.06.2012**
(21) Application number: 10306392.1
(22) Date of filing: 10.12.2010
(51) Int. Cl.: G06F 9/54

(54) **System for improving performance of a real time communication application**

(71) Applicant: Alcatel Lucent, 75007 Paris (FR)
(72) Inventor: Richard, Denis, 67400, ILLKIRCH (FR); Cayeux, Christian, 67400, ILLKIRCH (FR)
(74) Representative: Sciaux, Edmond

(57) **Abstract**

This system comprises a user space (US) and a kernel space (KS). The user space (US) comprises a buffer (BFI) and the kernel space (KS) comprises an input/output module (FSM), both being adapted to transfer all the data packets contained in the buffer (BFI) to the kernel space (KS) by a single system write call; and being adapted to fill up the buffer (BFI) with data packets transferred from the kernel space (KS) by a single system read call.

## Description

### BACKGROUND OF THE INVENTION

### Field of the invention

The present invention generally relates to a system for improving performance of a real time communication application. It can be implemented in a node of a telecommunication network, for instance.

### Description of the prior art

To illustrate the prior art, we can take the example of a Voice over IP (VOIP) application, such as a media gateway, that has to send and receive voice packets formatted using the Real-time Transport Protocol (RTP), described in the Request For Comments RFC3550. This application is running in a Unix-like operating system. As an example, we can consider a Linux operating system. This application is implemented as a user process with real-time priorities. In our example, the application sends RTP packets to many peer applications and receives RTP packets from many peer applications. For that, it uses standard API (Application Programming Interfaces) that are called "sockets".

In computer networking, an Internet socket or network socket is an endpoint of a bidirectional inter-process communication flow across an Internet Protocol-based computer network, such as the Internet. Internet sockets constitute a mechanism for delivering incoming data packets to the appropriate application process or thread. Each socket is mapped by the operating system to a communicating application process or thread. A socket address is the combination of an IP address (the location of the computer) and a port (which is mapped to the application program process) into a single identity, much like one end of a telephone connection is the combination of a phone number and a particular extension.

Within the operating system and the application that created a socket, the socket is referred to by a unique integer number called socket identifier or socket number. The operating system forwards the payload of incoming IP packets to the corresponding application by extracting the socket address information from the IP and transport protocol headers and stripping the headers from the application data. Each socket is bound to a different port in order to link a packet stream, sent or received via this socket, to a particular communication.

A program generally requests a service from an operating system's kernel, by making a system call, because it does not normally have permission to run. System calls provide the interface between a process and the operating system. Most operations interacting with the system require permissions not available to a user level process, e.g. input/output performed with a device present on the system, or any form of communication with other processes requires the use of system calls.

When many RTP packet streams are established for an application, this application makes many system calls "sendto" and "recvfrom" to the socket application programming interfaces respectively in charge of these streams. Each system call generates a switching of the processor, from a user context to a kernel context, or from a kernel context to a user context. Each switching is very costly in terms of processing power: It implies the saving or restoring of the user context (registers, etc...), and saving or restoring of the kernel context.

A consequence is that, on small hardware configuration with low power processing, the system is very quickly overloaded and quickly reaches a limit in terms of simultaneous RTP streams. Moreover, as the application has real-time priority, other applications sharing the same processor suffer from a lack of processing time.

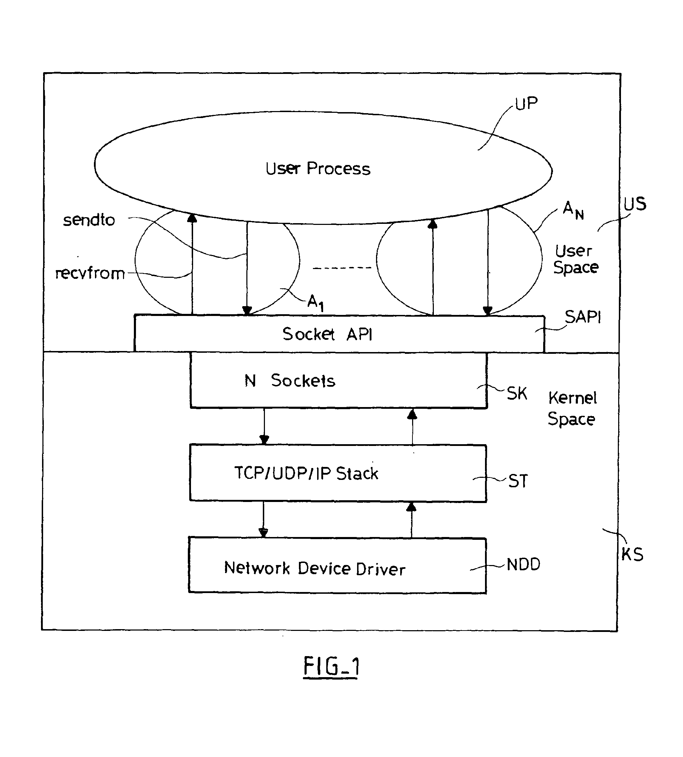

**Figure 1** is a block diagram showing an exemplary prior art system applying this known solution. This prior art system comprises a user space US coupled to a kernel space KS. For instance, a user process UP is running in the user space US for some telephony application of an IP private branch exchange. The kernel space KS comprises a plurality of sockets SK and a TCP/UDP/IP (Transmission Control Protocol/User Datagram Protocol/Internet Protocol) stack. The TCP/UDP/IP stack ST is coupled to a network device driver NDD.

A socket application programming interface SAPI is running in the user space US, in order to enable communication of this user process UP with the plurality of sockets SK in the kernel space KS. In this example, at a given time, the user process UP uses N sockets in parallel, respectively for N telephone calls respectively carried by N RTP (Real Time Transport Protocol) flows in each direction. The user process UP makes N pairs of system calls A1 ... AN, to the socket programming interface SAPI, each pair comprising a call "sendto" and a call "recvfrom".

A second known solution consists in managing the sending and receiving of packets with a software module embedded in the kernel space of the operating system. For instance, a media gateway module is embedded in the kernel space, and uses a DSP (Digital Signaling Processor) module and a TCP/UDP/IP (Transmission Control Protocol/User Datagram Protocol/Internet Protocol) stack that are both embedded in the kernel space KS. The TCP/UDP/IP stack ST is coupled to a network device driver NDD. This solution implies that a voice sampling should also be processed in the kernel space KS of the operating system.

This second known solution also has many drawbacks:
- No portability: a module, such as this media gateway module MGM, embedded in the kernel space is strongly linked to the kernel version. The kernel interfaces can change in a new kernel version. Then the module has to be adapted to each new version of the kernel.
- System crash risk: a bug in a kernel module can lead to a system crash, and a reboot of the system. In the kernel space, there is less protection than in user space. So a module embedded in the kernel space can damage any kernel data.
- No easy debugging: There are less debug tools in the kernel space than in the user space, and they are more difficult to use. Sometimes a server with a network connection may even be needed for debugging.

Thus, there is a need to provide a technical solution for improving the system performance when a real-time user process handles many real-time streams.
This can be solved by applying the system according to the invention.

### SUMMARY OF THE INVENTION

The object of the invention is a system for improving performance of a real time communication application, comprising a user space and a kernel space, characterized in that the user space comprises a buffer, and the kernel space comprises an input/output module; this buffer and this input/output module being adapted to transfer all the data packets contained in the buffer to the kernel space by a single system write call; and being adapted to fill up the buffer with data packets transferred from the kernel space by a single system read call. Thanks to this characteristic it is possible to dramatically decrease the number of system calls by the user process, while sending/receiving the same amount of data packets, because the user process uses a single input/output point to communicate with the kernel space. This single input/output point is triggered by a single system call, instead of multiple system calls for classical sockets. This input/output point interworks with a driver in the kernel space.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description, in which:
- Figure 1, already described above, is a block diagram showing an exemplary prior art system.
- Figure 2 is a block diagram representing an embodiment of the system according to the invention.
- Figure 3 is a graph showing the difference of performance between a prior art system and an embodiment of the system according to the invention.
- Figure 4 is a block diagram representing a write operation in an embodiment of the system according to the invention.
- Figure 5 is a block diagram representing a read operation in an embodiment of the system according to the invention.

### DETAILED DESCRIPTION OF PREFERRED EMBODIMENTS

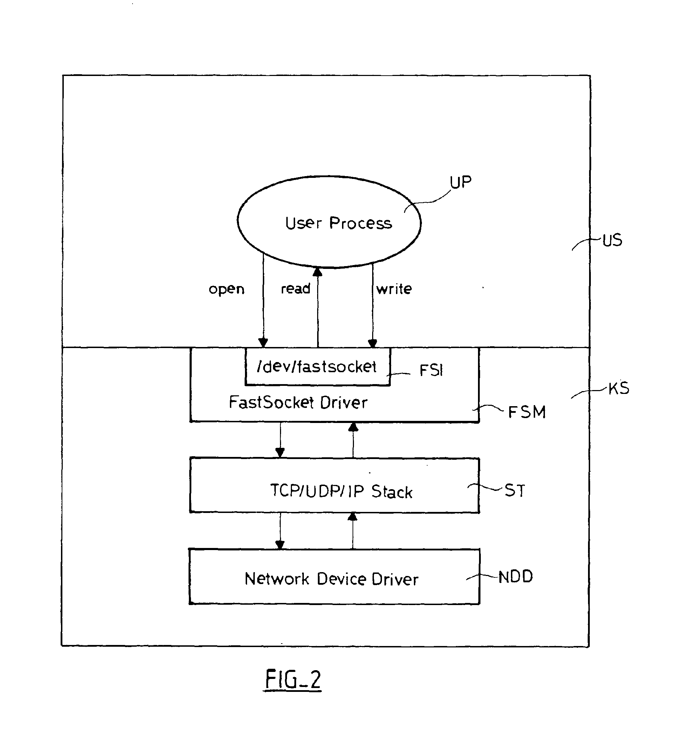

The block diagram on **Figure 2** represents an embodiment of the system according to the invention. This embodiment comprises a user space US coupled to a kernel space KS. They communicate with each other by means of a module interface, called Fastsocket Interface FSI for instance. This interface is a part of a software module, called Fastsocket Module FSM for instance, and supplies an unique input/output point for communications between the user space US and the kernel space KS. The kernel space KS comprises a Network Device driver NDD coupled to the Fastsocket module FSM via a TCP/UDP/IP stack ST.

For instance, a user process UP executes open/close operations, read operations, and write operations. The user process UP runs a task which must be periodically activated. The frequency is dependant of the data input rate. If we consider the example of a voice media gateway, the user process UP communicates with a DSP (Digital Signaling Processor), not represented on the figures, that transmits many voice frames to different ongoing communications. If the DSP is synchronized at a 20 ms rate, then a task must be activated every 20 ms to read voice frames from the DSP.

For instance, this task runs the following program:

```
 FOREACH active DSP channel
        IF a voice frame is ready THEN
                READ data from DSP
                APPEND HEADER + FRAME TO BUFFER
        END IF
 END FOREACH
 SEND whole buffer content to FastSocket driver
 IF data is ready for receive on FastSocket driver THEN
        READ BUFFER
        FOREACH frame into the buffer
                SEND frame to the DSP
        END FOREACH
 END IF
```

This program multiplexes voice frames in order to send a batch of voice frames to the network device driver NDD every 20 ms.
The sending of data to "FastSocket driver" is encapsulated into a header, as defined below. The receiving of data from "FastSocket driver" is also encapsulated into a header, as defined below.

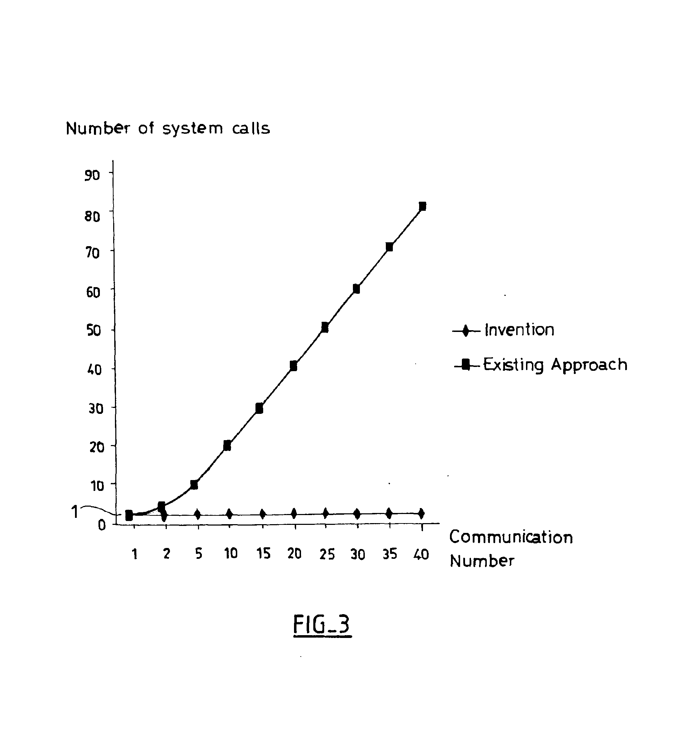

**Figure 3** is a graph showing the difference of performance between a prior art system and an embodiment of the system according to the invention.
If a media gateway has ten active bi-directional voice communications, there are two system calls to the FastSocket Module FSM every 20 ms (one write operation and one read operation). This number remains the same whatever the number of communications is.

Let's compare with the known socket approach:

```
        1 st task:
 FOREACH active DSP channel
        IF a voice frame is ready THEN
                READ data from DSP
                SEND data to Socket
        END IF
 END FOREACH
 2nd task:
 FOREACH active socket
        IF data is ready for receive on socket THEN
                READ data from socket
 SEND data to the DSP
 END IF
 END FOREACH
```

With this known solution, the user process UP should be multi-threaded. A first task manages data from the DSP, and a second task manages data from a plurality of classical sockets. If the media gateway has ten active communications, the number of system calls to sockets is twenty (ten for write and ten for read). This number of system calls increases with the number of communications. The graph on **Figure 3** gives a comparison of the numbers of system calls respectively between the invention and the existing solution when the number of communications increases from one up to forty. It shows that the number of system calls remains equal to one with the proposed solution whereas it rises up to eighty with the known solution. Thus the system according to the invention dramatically decreases the number of system calls, and as a consequence it dramatically increases the performance.

The description of the FastSocket Module FSM is split in two, respectively for the write and the read operations.

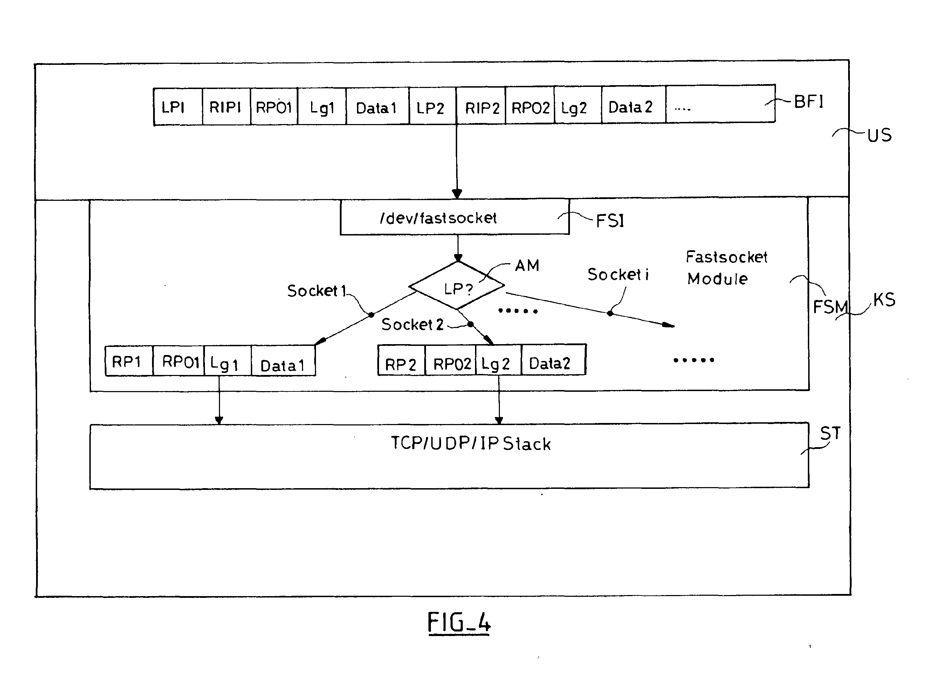

**Figure 4** is a block diagram representing a write operation in an embodiment of the system according to the invention.

In order to send a plurality of data packets to a protocol stack ST in the kernel space KS, via the Fastsocket Interface FSI of the Fastsocket Module FSM, a buffer interface BFI is defined in the user space US. The interface BFI may have the following format for the write operation:
| ------------------------------------------------------------
   | LOCAL_PORT | REMOTE_IP | REMOTE_PORT | LENGTH | DATA....... | ... Next packet
   | ------------------------------------------------------------
   - LOCAL_PORT = LP1, LP2, ... (local sending port which defines the socket to send to).
   - REMOTE_IP = RIP1, RIP2, ... (IP address of the receiver of the packet).
   - REMOTE_PORT = RP01, RP02, ... (Remote receiver port of the packet).
   - LENGTH = Lg1, Lg2, ... (length of the data field).
   - DATA = Data 1, Data 2, ... (Data to be sent on the Fastsocket Module FSM).

All the data packets contained in the buffer BFI are transferred from the user space US to the kernel space KS, by means of a single system call applied to the Fastsocket Interface FSI. Then an analyzer module AM of the Fastsocket Module FSM receives and analyses the data packets in order to send them to their respective destinations that are classical sockets: socket 1, socket 2, ..., socket i, linking the Fastsocket Module FSM and the protocol stack ST. The right socket is known thanks to the LOCAL_PORT field. After being supplied to one of the classical sockets: socket 1, socket 2, ..., socket i, a packet follows its way classically through the protocol stack ST of the kernel space KS.

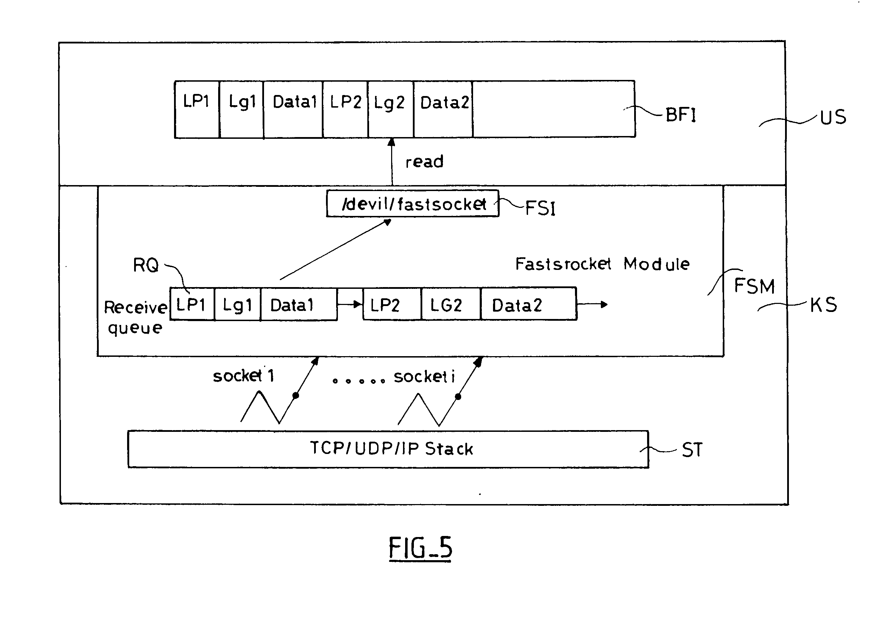

**Figure 5** is a block diagram representing a read operation in an embodiment of the system according to the invention.
In order to receive data packets from the protocol, via the Fastsocket Interface FSI of the Fastsocket Module FSM, a buffer interface BFI is defined in the user space US. The interface BFI may have the following format for the read operation:
| -------------------------------------------------
   | LOCAL_PORT | REMOTE_PORT | LENGTH DATA | ....... | ... Next message
   | --------------------------------------------------
   - LOCAL_PORT = LP1, LP2, ... (local port of the message).
   - REMOTE_PORT = RIP1, RIP2, ... (source port of the message, port used by the sender).
   - LENGTH = Lg1, Lg2, ... (length of the data field).
   - DATA = Data 1, Data 2, ... (received data).

A plurality of data packets, which may fill up the buffer BFI, is transferred from the kernel space KS to the user space US, via the Fast Socket Interface FSI of the Fastsocket Module FSM by a single read system call applied to the Fastsocket Interface FSI. This latter receives packets from the protocol stack ST via a plurality of classical sockets: socket 1, socket 2, ..., socket i.

The Fastsocket Interface FSI returns as many packets as the user buffer BFI can contain, if enough packets are available, of course.
The packets are received asynchronously by the Fastsocket Module FSM, from each of the classical sockets, and are then stored in a queue RQ, in this example. When a read system call is executed, the packets are read from the queue RQ to the buffer BFI, and then are returned to a user process.

## Claims

1. A system for improving performance of a real time communication application, comprising a user space (US) and a kernel space (KS), **characterized in that** the user space (US) comprises a buffer (BFI) and the kernel space (KS) comprises an input/output module (FSM), both being adapted to transfer all the data packets contained in the buffer (BFI) to the kernel space (KS) by a single system write call; and being adapted to fill up the buffer (BFI) with data packets transferred from the kernel space (KS) by a single system read call.

2. A digital data storage medium storing a set of machine executable program instructions, which, when executed on a computer, cause the computer to perform all the method steps of the method according to claim 1.

3. A computer program product comprising computer-executable instructions for performing a method when the program is run on a computer, the method comprising the steps according to claim 1.
